# EUROPÄISCHE PATENTSCHRIFT

(11) **EP 1 268 092 B1**
(45) Veröffentlichungstag und Bekanntmachung des Hinweises auf die Patenterteilung: **08.10.2003**
(21) Anmeldenummer: 01929219.2
(22) Anmeldetag: 02.03.2001
(51) Int. Cl.: B08B 5/02, B08B 5/04, B08B 15/04, B41F 23/00, B26D 7/18

(54) **VORRICHTUNG ZUM ENTSTAUBEN EINER WARENBAHN**
DEVICE FOR DEDUSTING A WEB OF ENDLESS FABRIC
DISPOSITIF POUR ENLEVER LA POUSSIERE D'UNE BANDE DE MATERIAU

(30) Priorität: 06.04.2000 DE 10016822
(43) Veröffentlichungstag der Anmeldung: 02.01.2003
(73) Patentinhaber: Koenig & Bauer Aktiengesellschaft, 97080 Würzburg (DE)
(72) Erfinder: STIEL, Jürgen, Alfred, 97289 Thüngen (DE)
(86) Internationale Anmeldenummer: DE0100806
(87) Internationale Veröffentlichungsnummer: WO01076777

(56) Entgegenhaltungen:
- WO-A-96/07490
- WO-A-98/19009
- CH-A- 613 881
- DE-A- 4 425 666
- US-A- 4 026 701
- US-E- R E20 687

## Beschreibung

Die Erfindung betrifft eine Vorrichtung zum Entstauben einer Warenbahn gemäß dem Oberbegriff der Ansprüche 1 oder 3.

Durch die WO 96/07490 A1 ist eine Vorrichtung zum Entfernen von Staub bekannt, wobei mittels an die Warenbahn angestellten Düsen ein Anströmen und Absaugen erfolgt.

Die CH 613 881 A5 beschreibt eine Vorrichtung zum Entstauben einer Materialbahn, die um ein Rohr geführt wird. Im von Materialbahn und Rohr gebildeten Einlaufbereich ist eine Blasdüse angeordnet. Das Rohr ist mit Luftabströmkanälen versehen.

Die DE 631 858 C zeigt eine Vorrichtung zum Auffangen von Papierstaub. Dabei ist einer von einer Papierbahn umschlungenen Walze eine Längsschneideinrichtung und eine Absaugeinrichtung zugeordnet.

Die US Re. 20,687 und die DE 44 22 666 A1 offenbaren eine Schneideinrichtung mit einer Absaugeinrichtung.

Der Erfindung liegt die Aufgabe zugrunde, eine Vorrichtung zum Entstauben einer Warenbahn zu schaffen.

Die Aufgabe wird erfindungsgemäß durch die Merkmale der Ansprüche 1 oder 3 gelöst.

In vorteilhafter Weise wird mit der Erfindung ein Lösen und Absaugen von Staubpartikeln in Bereichen erhöhter Staubentstehung erreicht. Die Staubpartikel werden unter Nutzung einer erzwungene Strömung am Entstehungsort selbst, oder an Orten, an denen eine bevorzugte Ablösung durch Umlenkung oder Erschütterung erfolgt, abgelöst und abgesaugt. Die mit der Erfindung erzielbaren Vorteile bestehen darin, dass im Bereich von Walzen oder Rollen, insbesondere bei der Umlenkung einer Warenbahn, die auf der Warenbahn mitgeführte Staubfracht sich zum Teil bereits selbsttätig löst und durch eine erzwungene Strömung abgesaugt wird und zum anderen Teil nichtgelöste Staubpartikel durch einen Luftstrom von der Oberfläche abgelöst und abgesaugt werden. Vorteilhaft ist insbesondere die Anordnung im Bereich der Schneidmesser.

Im Bereich von Walzen ist insbesondere auch eine Anordnung der Düsen von Vorteil, bei der die erzwungene Strömung zwischen Warenbahn und Walze verläuft, wobei in diesem Fall die Oberfläche der Walze selbst die Leitfläche darstellt.

Ausführungsbeispiele der Erfindung sind in den Zeichnungen dargestellt und werden im folgenden näher beschrieben.

Es zeigen:
- Fig. 1: eine schematische Darstellung einer Seitenansicht einer Vorrichtung zum Entstauben einer Warenbahn;
- Fig. 2: eine Draufsicht gemäß Fig. 1 mit Aussparung und Schneideinrichtung;
- Fig. 3: eine schematische Darstellung einer Seitenansicht einer Vorrichtung zum Entstauben einer Warenbahn zwischen Walze und Warenbahn.

In Druckmaschinen, insbesondere Rollenmaschinen, haftet durch elektrostatische Aufladung und durch staubintensive Bearbeitungsschritte, z. B. Schneiden, Staub auf der Oberfläche einer Warenbahn 01, z. B. einer Papierbahn 01. Im Bereich von Einrichtungen zur Bahnführung, beispielsweise einer Leitwalze 02, einer Wendestange 02 oder einer z. B. rotierenden Walze 02, ist die Vorrichtung zum Entstauben angeordnet.

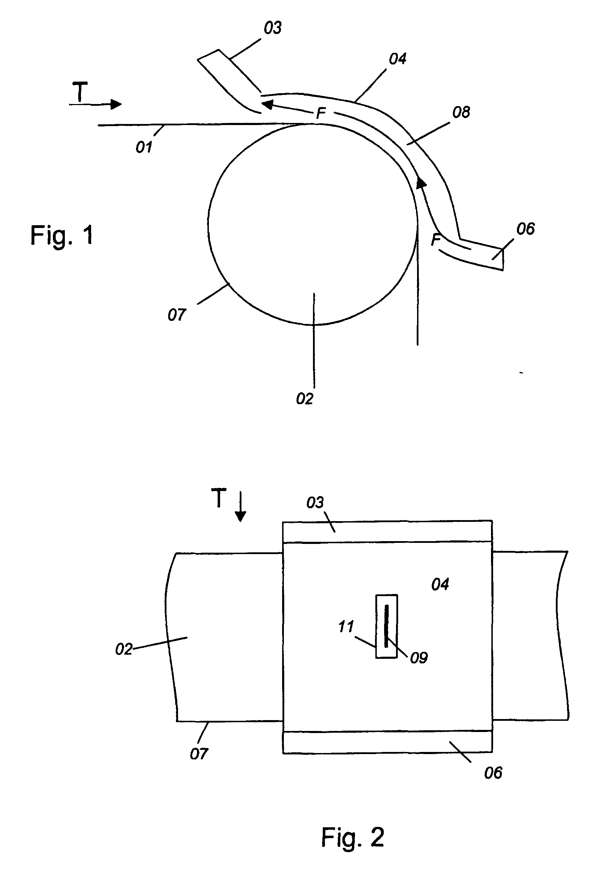

In einem ersten Ausführungsbeispiel (Fig. 1) weist die Vorrichtung zur Entstaubung mindestens eine Düse 03 zum Absaugen, eine Leitfläche 04 und mindestens eine Düse 06 zum Einblasen eines mit Druck beaufschlagten Fluids F, beispielsweise Druckluft F, auf, die in Umfangsrichtung der Walze 02 voneinander beabstandet sind. Als Leitfläche 04 können bei geringem Abstand der Düsen 03 und 06 auch die Stirnseiten der Wandungen der Düsen 03 und 06 dienen. Die Düsen 03 und 06 sowie die Leitfläche 04 sind von der Mantelfläche 07 der Walze 02 beabstandet und bilden mit der Mantelfläche 07 zusammen einen Kanal 08 aus, in dem an der Mantelfläche 07 anliegend die Papierbahn 01 in Transportrichtung T läuft. Die Druckluft F verläßt im Betriebszustand die Düse 06 und strömt zum Großteil durch den Kanal 08 in Richtung zur Düse 04. Auf diesem Weg nimmt die Druckluft F bereits gelöste Staubpartikel auf und löst gleichzeitig durch den Impuls noch an der Papierbahn 01 haftende Staubpartikel. Der Überdruck mit dem die Druckluft F beaufschlagt ist kann zwischen 0,5 und 8 bar liegen. In vorteilhafter Weise ist als Austrittsgeschwindigkeit annähernd die Schallgeschwindigkeit gewählt. Die Düse 03 zum Absaugen wird mit Unterdruck beaufschlagt, vorzugsweise ist ein Betrag des Unterdruckes kleiner als ein Zehntel des Betrages des Überdruckes der Düse 06.

Die Leitfläche 04 ist vorteilhafter Weise der Form der Mantelfläche 07 in Umfangsrichtung der Walze 02 nachempfungen. Die Leitfläche 04 kann jedoch, zumindest teilweise so geformt sein, dass die Druckluft F als erzwungene Strömung, insbesondere im Bereich der Düse 04 zur Absaugung turbulent geführt wird, damit befrachtete Strömung z. B. von Papierbahn 01 ablöst. Sollen Erschütterungen vermieden werden, so ist Kanalführung laminar, z. B. ohne Abrißkanten und mit entsprechenden Strömungsgeschwindigkeiten zu gestalten.

Fig. 2 zeigt in vorteilhafter Ausführung die Anordnung der Düsen 03 und 06 an der Walze 02 im Bereich einer Schneideinrichtung, beispielsweise eines Messers 09 angeordnet. Zwischen der Düse 03 und der Düse 06 ist die Leitläche 04 angeordnet, zwischen denen, in Umfangsrichtung der Walze 02 betrachtet, ein Messer 09 so angeordnet ist, dass es auf die Papierbahn 01 abgesenkt werden kann. Hierfür ist in der Leitfläche 04 eine Aussparung 11 vorgesehen. Die Breiten sowie die Anordnung der Düsen 03 und 06 in Längsrichtung der Walze 02 sind so gewählt, dass die Düsen 03 und 06 beidseitig die Schnittebene des Messers 09 sicher überdecken.

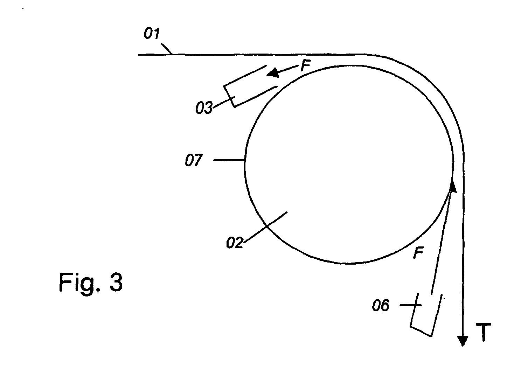

In einem zweiten Ausführungsbeispiel (Fig. 3) sind die Düsen 03, 06 auf der selben Seite der Papierbahn 01 angeordnet wie die Walze 02. Die Druckluft F strömt in diesem Fall durch den Kanal 08, der durch die Papierbahn 01 auf der einen, und durch die Mantelfläche 07 auf der anderen Seite gebildet wird. Eine gesonderte Leitfläche 04 kann hier entfallen. In vorteilhafter Ausführung ist die Düse 06 so an die Walze 02 angestellt, dass die Druckluft F tangential zur Mantelfläche 07 der Walze 02 in den Kanal 08 strömt.

In den beschriebenen Ausführungsvarianten war die Strömung der Druckluft F jeweils entgegen der Rotation der Mantelfläche 07 bzw. entgegen der Transportrichtung T gerichtet. Selbstverständlich kann die Strömung für bestimmte Anwendungen auch in umgekehrter Richtung verlaufen.

### Bezugszeichenliste

- 01: Warenbahn, Papierbahn
- 02: Walze, Leitwalze, Wendestange
- 03: Düse, Einblasen
- 04: Leitfläche
- 05: -
- 06: Düse, Absaugen
- 07: Mantelfläche (02)
- 08: Kanal
- 09: Messer, Schneideinrichtung
- 10: -
- 11: Aussparung (04)

- F: Fluid, Druckluft
- T: Transportrichtung

## Patentansprüche

1. Vorrichtung zum Entstauben einer Warenbahn (01), die in Transportrichtung (T) über eine Mantelfläche (07) einer Walze (02) geführt ist, wobei die Vorrichtung mindestens eine Düse (03) zum Absaugen eines Fluids (F), mindestens eine Düse (06) zum Einblasen des Fluids (F) und eine Leitfläche (04) aufweist, **dadurch gekennzeichnet, dass** die Düse (03) zum Absaugen und die Düse (06) zum Einblasen in Umfangsrichtung der Walze (02) hintereinander angeordnet sind und dass zwischen den zusammengehörigen Düsen (06; 03) eine Schneideinrichtung (09) angeordnet ist, dass eine Leitfläche (04) in Umfangsrichtung außerhalb der Walze (02) zwischen den beiden Düsen (03; 06) angeordnet ist und dass diese Leitfläche (04) und eine Mantelfläche (07) der Walze (02) einen Kanal (08) bilden, in dem an der Mantelfläche (07) anliegend die Warenbahn (01) läuft.

2. Vorrichtung nach Anspruch 1, **dadurch gekennzeichnet, dass** die Leitfläche (04) eine Aussparung (11) zur Aufnahme der Schneideinrichtung (09) aufweist.

3. Vorrichtung zum Entstauben einer Warenbahn (01), die in Transportrichtung (T) über eine Mantelfläche (07) einer Walze (02) geführt ist, wobei die Vorrichtung mindestens eine Düse (03) zum Absaugen eines Fluids (F) und mindestens eine Düse (06) zum Einblasen des Fluids (F) aufweist, **dadurch gekennzeichnet, dass** eine Düse (03) der beiden zusammen gehörigen Düsen (03; 06) im von Warenbahn (01) und Walze (02) gebildeten Einlaufbereich und die andere Düse (06) im von Warenbahn (01) und Walze (02) gebildeten Auslaufbereich angeordnet ist und dass die Strömungsrichtung des Fluids (F) entgegen der Transportrichtung (T) der Warenbahn (01) verläuft.

4. Vorrichtung nach Anspruch 3, **dadurch gekennzeichnet, dass** das Fluid (F) zwischen der Warenbahn (01) und der Mantelfläche (07) in Umfangsrichtung der Walze (02) strömt.

5. Vorrichtung nach den Ansprüchen 1 oder 3, **dadurch gekennzeichnet, dass** das Fluid (F) einen Überdruck von 0,5 bis 8 bar aufweist.

6. Vorrichtung nach Anspruch 5, **dadurch gekennzeichnet, dass** das Fluid (F) beim Austritt aus der Düse (06) nahezu Schallgeschwindigkeit aufweist.

7. Vorrichtung nach den Ansprüchen 1 oder 3, **dadurch gekennzeichnet, dass** die Düse (06) so angeordnet ist, dass die Strömungsrichtung des Fluids (F) beim Austritt aus der Düse (06) nahezu tangential zur Mantelfläche (07) der Walze (02) verläuft.

8. Vorrichtung nach den Ansprüchen 1 oder 3, **dadurch gekennzeichnet, dass** die Austrittsgeschwindigkeit des Fluids (F) zwischen 300 und 340 m/s liegt.

## Claims

1. Device for removing dust from a web of material (01) that is being run in the direction of transport (T) over a cylindrical surface (07) of a roller (02), whereby the device has at least one nozzle (03) for extraction of a fluid (F), at least one nozzle (06) for blowing in the fluid (F) and a guide surface (04), **characterized in that** the nozzle (03) for extraction and the nozzle (06) for blow-in are arranged one behind the other around the circumference of the roller (02) and that between the associated nozzles (06; 03) a cutting device (09) is arranged so that a guide surface (04) is arranged circumferentially outside the roller (02) between the two nozzles (03; 06) and this guide surface (04) and a cylindrical surface (07) of roller (02) form a channel (08), in which the web of material (01) runs lying on the cylindrical surface (07).

2. Device according to claim 1, **characterized in that** the guide surface (04) has an opening (11) for receiving the cutting device (09).

3. Device for removing dust from a web of material (01) that is being run in the direction of transport (T) over a cylindrical surface (07) of a roller (02), whereby the device has at least one nozzle (03) for extraction of a fluid (F), at least one nozzle (06) for blowing in the fluid (F), **characterized in that** a nozzle (03) of the two associated nozzles (03, 06) is arranged in the infeed area formed by web of material (01) and roller (02) and the other nozzle (06) is in the exit area formed by web of material (01) and roller (02) and that the direction of flow of the fluid (F) is opposite the direction of transport (T) of the web of material (01).

4. Device according to claim 3, **characterized in that** the fluid (F) flows between the web of material (01) and the cylindrical surface (07) in the circumferential direction of the roller (02).

5. Device according to claims 1 or 3, **characterized in that** the fluid (F) has an overpressure of 0.5 to 8 bar.

6. Device according to claim 5, **characterized in that** the fluid (F) when exhausted from the nozzle (06) has almost the speed of sound.

7. Device according to claims 1 or 3, **characterized in that** the nozzle (06) is arranged so that the direction of flow of the fluid (F) on leaving the nozzle (06) is almost tangential to the cylindrical surface (07) of the roller (02).

8. Device according to claims 1 or 3, **characterized in that** the exhaust speed of the fluid (F) lies between 300 and 340 m/s.

## Revendications

1. Dispositif pour enlever la poussière d'une bande de matériau (01), guidée dans la direction de transport (T) sur une surface d'enveloppe (07) d'un cylindre (02), le dispositif présentant au moins une buse (03) pour aspirer un fluide (F), au moins une buse (06) pour insuffler le fluide (F) et une surface de guidage (04), **caractérisé en ce que** la buse (03) devant aspirer et la buse (06) devant insuffler sont disposées l'une derrière l'autre dans la direction périphérique du cylindre (02), et **en ce qu'**entre les buses (06;03) afférentes est disposé un dispositif de découpage (09), **en ce qu'**une surface de guidage (06) est disposé dans la direction périphérique, à l'extérieur du cylindre (02), entre les deux buses (03;06), et **en ce que** cette surface de guidage (04) et une surface d'enveloppe (07) du cylindre (02) forment un canal (08) dans lequel la bande de matériau (01) se déplace, en appui sur la surface d'enveloppe (07).

2. Dispositif selon la revendication 1, **caractérisé en ce que** la surface (04) présente un évidement (11) afin de recevoir le dispositif de découpage (09).

3. Dispositif pour enlever la poussière d'une bande de matériau (01), guidée dans la direction de transport (T) sur une surface d'enveloppe (07) d'un cylindre (02), le dispositif présentant au moins une buse (03) pour aspirer un fluide (F) et au moins une buse (06) pour insuffler le fluide (F), **caractérisé en ce qu'**une buse (03), parmi les deux buses (03;06) impliquées ensemble, est disposée dans la zone d'introduction, formée par la bande de matériau (01) et le cylindre (02), et l'autre buse (06) est disposée dans la zone d'évacuation formée par la bande d'évacuation (01) et le cylindre (02), et **en ce que** la direction d'écoulement du fluide (F) s'étend à l'encontre de la direction de transport (T) de la bande de matériau (01).

4. Dispositif selon la revendication 3, **caractérisé en ce que** le fluide (F) s'écoule entre la bande de matériau (01) et la surface d'enveloppe (07), dans la direction périphérique du cylindre (02).

5. Dispositif selon la revendication 1 ou 3, **caractérisé en ce que** le fluide (F) est placé sous une surpression de 0,5 à 8 bar.

6. Dispositif selon la revendication 5, **caractérisé en ce que** le fluide (F), à la sortie de la buse (6), présente une vitesse à peu près égale à la vitesse du son.

7. Dispositif selon les revendications 1 ou 3, **caractérisé en ce que** la buse (06) est disposée de manière que la direction d'écoulement du fluide (F), à la sortie de la buse (06), soit à peu près tangentielle à la surface d'enveloppe (07) du cylindre (02).

8. Dispositif selon la revendication 1 ou 3, **caractérisé en ce que** la vitesse de sortie du fluide (F) est située entre 300 et 340 m/s.
